# EUROPEAN PATENT SPECIFICATION

(11) **EP 4 130 199 B1**
(45) Date of publication and mention of the grant of the patent: **08.05.2024**
(21) Application number: 22188306.9
(22) Date of filing: 02.08.2022
(51) Int. Cl.: C10G 1/10, C10B 53/07, B01J 19/00, C10B 57/02

(54) **PROCESS FOR CRACKING A POLYOLEFIN CONTAINING MATERIAL**
VERFAHREN ZUM CRACKEN EINES POLYOLEFINHALTIGEN MATERIALS
PROCÉDÉ DE CRAQUAGE D'UN MATÉRIAU CONTENANT DES POLYOLÉFINES

(30) Priority: 04.08.2021 WO PCT/EP2021/071786; 15.09.2021 BE 202105723
(43) Date of publication of application: 08.02.2023
(73) Proprietor: Indaver Plastics2chemicals, 2030 Antwerpen (BE)
(72) Inventor: ALDERWEIRELDT, Nick, Zoersel (BE); KRESOVIC, Uros, Wezemaal (BE)
(74) Representative: Gevers Patents

(56) References cited:
- US-A1- 2013 245 345
- US-A1- 2016 040 074

## Description

The present invention relates to a process for cracking a polyolefin containing material wherein the material is thermally cracked to be converted into one or more gaseous cracking products thereby leaving only a solid residue. The solid residue comprises carbon, i.e char, and uncrackable materials such as inorganic materials. The solid residue is preferably completely cracked so that it is free of hydrocarbons. The polyolefin containing starting material contains at least 60 %, preferably at least 70% by dry weight of one or more polyolefins and optionally at least one thermally more stable polymer. The plastic material is in particular a waste material, more in particular a post-consumer waste material from curb-stone collection.

Waste materials, such as municipal solid waste, contain a relatively large fraction of polymeric materials, including polyolefins. These polyolefins are often landfilled or incinerated for energy recovery. Recycling of materials become however more and more important. The recovery of secondary materials is to be preferred over incineration or landfilling. A problem with recycling polyolefins is that the recycling process should be made more cost effective so that it becomes an interesting alternative to the use of the plastic waste material as energy source.

Polyolefin waste can be cracked to produce hydrocarbons having molecular weights within different ranges. Such cracking process produces gaseous or in other words non-condensable hydrocarbons, in particular C₁ to C₅ hydrocarbons, and liquid mixtures of hydrocarbons having boiling points higher than about 40°C. Moreover, a solid residue is produced when the material is cracked until a bone dry composition is obtained. This solid residue comprises char and also inorganic compounds, which are mainly mineral fillers, inorganic pigments and impurities, such as sand and salts, which cannot be cracked. The solid residue may also comprise a lot of aluminium in case the plastic material comprises polyal, i.e. a complex material containing a combination of aluminium and polymeric layers.

The production of gaseous hydrocarbons and of char is to be kept to a minimum as they are mainly only useful as fuel. The liquid hydrocarbons comprise a lower boiling naphtha fraction and a higher boiling wax fraction. Paraffin wax is the most valuable cracking product of polyolefins, at least if it consists mainly of straight paraffinic hydrocarbons. Paraffin wax may consist for example of a mixture of hydrocarbons having boiling points comprised between 425°C and 525°C, i.e. a mixture of C₂₈ to C₄₀ hydrocarbons.

In his article *"*Continuous flow cracking of waste plastics", in Fuel Processing Technology, August 2005, J. Walendziewski describes an extruder for melting waste plastics followed by a tube reactor for thermally cracking the molten material leaving the extruder. The waste plastics comprise polypropylene, polyethylene and/or polystyrene. In the extruder the waste plastics are heated to a temperature of 250°C. The molten plastic material is then cracked in the tube reactor at a temperature of between 420 and 500°C. The material is cracked so as to be converted in a gaseous cracking product and immediately also into a solid residue which mainly comprises char. The tube reactor comprises a screw mixer to mix and distribute the fluid over the internal surface reactor wall and to remove the solid carbon residue from the reactor wall and transport it out of the reactor. The reactor is upwardly inclined so that not only the solid carbon residue is removed from the outlet of the tube reactor but also the other products which have been cracked to evaporation. For a mixture of 90% PE and 10% PS, cracked under atmospheric pressure and at a reactor wall temperature of between 420°C and 480-500°C, the cracking products comprised 85.3 wt.% of liquid product, 9.93 wt.% gaseous product and 4.17 wt.% solid carbon residue (char), the latter including only 0.68 wt.% of inorganic material contained in the plastic feed material and thus a substantial amount of char produced during the cracking process. The liquid product contained no, or nearly no wax compounds as 80% of distillate volume was obtained at a distillation temperature of 346°C (i.e. at the boiling point of a C₂₀ hydrocarbon).

A drawback of the process of Walendziewski is that the liquid product yield is only about 85% and that this liquid product only consists of fractions (gasoline and light gas oils) which comprise hydrocarbons having boiling points within the range of 35 to 360°C, i.e. C₅ to C₂₂ hydrocarbons. Such fuel fractions can only be used as fuel or as feed for a steam cracker to produce monomers, in particular ethylene, propylene and butylene.

A further drawback of the process of Walendziewski is that the plastic material is cracked at a relatively low temperature so that the plastic material may not contain polymers which are thermally more stable than the polyolefins contained in the plastic material, for example biopolymers or certain rubbers which are for example contained in high impact polystyrene (HIPS). Indeed, these thermally more stable polymers also need to be cracked to evaporation in order to obtain a bone dry residue, i.e. a solid residue which is not in the form of a tar and which can thus be removed easily from the reactor. A higher cracking temperature is thus required to crack also these thermally more stable polymers. Applying such a higher temperature in the tube reactor of Walendziewski would however further increase the yield of non-condensable gaseous product and of char and would thus further reduce the yield of the more valuable higher hydrocarbons. From an economic point of view, the process of Walendziewski is thus not suited for treating post-consumer materials, which comprise a mixture of different plastic materials, having different T₅₀ degradation temperatures, and/or which are polluted with organic waste/biopolymers.

WO 2013/119941 also discloses a tube reactor with an internal screw for cracking waste plastics. Cracking/pyrolysis is performed at a temperature of between 454 and 488°C. The tube reactor is an industrial reactor which comprises, downstream the pyrolysis zone, a devolatilisation zone wherein any remaining liquid material is further cracked, at a temperature of between 488 and 982°C, to produce a solid char product which is removed at the end of the tube reactor. At the transition between the pyrolysis zone and the devolatilisation zone a discharge port is provided for the evaporated cracking products. Just before the pyrolysis zone, a liquid paraffin or microcrystalline wax product, which comprises a mixture of C₃₀ to C₇₀ hydrocarbons, is tapped off from the liquid phase present in the reactor. In this known process, the non-condensable product and the lower boiling liquid product (naphtha product) are thus tapped off from the gaseous phase contained in the reactor whilst the higher boiling liquid product (wax product) is tapped off from the liquid phase contained in the reactor.

In the process disclosed in WO 2013/119941 the polyolefin containing material is not cracked to be converted in one or more gaseous cracking products leaving further only a solid non-crackable residue since a wax product is tapped off from the liquid phase contained in the reactor. Instead, the polyolefin containing material is cracked to be converted in the reactor in one or more gaseous cracking products, into a solid residue and into a liquid cracking product. A drawback of tapping off the wax product from the liquid phase is that it will also contain quite some impurities such as char and other inorganic impurities from the starting feedstock. Moreover, it will also contain molten hydrocarbon material with a boiling point which is still too high to be used as a wax. A wax, in particular a microcrystalline wax, comprises indeed only hydrocarbons having up to 40 carbon atoms, or even less, at most. In practice, the material tapped off from the liquid phase in the process of WO 2013/119941 is not used as a wax but is added, in a granular form, to a virgin thermoplastic material. In WO 2013/119941 the feed of the plastic material needs to be controlled accurately so that at the location of the wax take-off port the liquid material is sufficiently cracked whilst the level of the melt boundary is still sufficiently high at the location of the wax take-off port in order to be able to tap off the desired amount of wax product.

A further drawback of the tube reactor disclosed in WO 2013/119941 is that once evaporated the gaseous cracking products still have to travel over a considerable distance through the head space in the tube reactor before they are removed from the reactor. WO 2013/119941 proposes to introduce a purge gas, for example a portion of the non-condensable gaseous product, in the coldest portion of the pyrolysis zone to remove the evaporated cracking products more quickly from the reactor to avoid over-cracking thereof. However, such a purge gas causes an additional load for the separation apparatus used to separate the gaseous and the liquid products. The discharge port for discharging the vapours produced in the final zone, i.e. the higher temperature zone wherein the solid char product is produced, is moreover also situated at the transition between the pyrolysis zone and the devolatilisation zone. These hotter vapours are therefore transported towards the pyrolysis zone and can thus increase the temperature of the vapours leaving the pyrolysis zone and accelerate the further cracking thereof. It is to be expected that the material which is cracked to evaporation contains a considerable amount of gaseous product even when a purge gas is used.

US 2013/0245345 discloses to replace one pyrolysis reactor, operated at about 400°C, by a cascade of two or more tube reactors operated at lower, increasing temperatures. The first reactor is operated at a temperature at which lower boiling hydrocarbons are extracted from the reactor whilst the next reactor or reactors are operated at higher temperatures so that high boiling hydrocarbons are extracted from these reactors. In this way, it is no longer necessary to perform post-extraction re-processing of the extracted hydrocarbons to separate them into their respective fractions. These fractions include for example a gas fraction, comprising methane, ethane, butane and propane, a petroleum fraction and a diesel fraction. The first reaction is for example operated at around 150°C, which is the boiling point of a C₉ hydrocarbon, the second reactor at around 250°C, which is the boiling point of a C₁₄ hydrocarbon, and the third reactor at around 350°C, which is the boiling point of a C₂₁ hydrocarbon.

A drawback of this prior art method is that a catalyst has to be used in order to be able to crack the hydrocarbon-containing material at such low temperatures, i.e. at temperatures around the boiling points of the fuel fractions which are to be produced. This catalyst has to be separated from the solid residue and involves additional costs, especially since some of the catalyst will be lost or will need to be renewed. A further drawback of this prior art method is that different materials, in particular rubber and plastics, should not be processed simultaneously in the same reactor since the temperature at which certain organic compounds are evolved from different raw material sources may differ from source to source requiring conditions in a given reactor to be optimised for a given raw material type.

An object of the present invention is to provide a new process for cracking a polyolefin containing material wherein the material is cracked into one or more gaseous cracking products leaving further only a solid residue consisting of non-crackable materials, which process enables to achieve a higher yield of a wax fraction in the gaseous cracking product and to keep the yield of non-condensable gaseous product in the evaporated cracking product limited.

To this end, the process according to the invention is characterised in that the polyolefin containing material is cracked stepwise in at least two successive cracking phases, including a first cracking phase and a final cracking phase. The material is cracked in one tank reactor which contains a liquid phase and a gaseous phase, the liquid phase being cracked in each of the cracking phases to produce a gaseous cracking product which is removed from the tank reactor during the production thereof. During the first cracking phase the tank reactor is continuously fed with said polyolefin containing material whilst during the final cracking phase feeding of said polyolefin containing material in the tank reactor is interrupted and the liquid phase remaining in the tank reactor at the end of said first cracking phase, i.e. when having interrupted the feeding of the polyolefin containing material in the reactor, is further cracked during the final cracking phase to produce a final gaseous product and a solid residue. In the process according to the invention the liquid phase contained in said tank reactor is kept during said first cracking phase at a first temperature of between 420°C and 510°C and is cracked during said first cracking phase in said tank reactor at said first temperature to produce a first gaseous cracking product; the first gaseous cracking product is removed during the first cracking phase from the tank reactor during the production thereof and is subsequently at least partially condensed; the liquid phase which remains at the end of the first cracking phase in said tank reactor is heated during said final cracking phase to a final temperature of at least 525°C and is cracked during said final cracking phase to produce said final gaseous cracking product and said solid residue; the final gaseous cracking product is removed during the final cracking phase from the tank reactor during the production thereof and is subsequently at least partially condensed; after having produced the solid residue, it is removed from the tank reactor; and after having removed the solid residue from the tank reactor, the first cracking phase is restarted.

In the method according to the present invention, the polyolefin containing material is cracked to be converted into gaseous cracking products leaving a solid residue, i.e. a residue which is solid under the cracking conditions. The gaseous products are at least partially condensed to produce liquid hydrocarbons. The expression "at least partially" is used here since the gaseous products will normally contain non-condensable products, i.e. gases, which will not be condensed when condensing the gaseous products, in particular when the gaseous products are cooled down, at atmospheric pressure, to a temperature of about 40°C. An advantage of producing only gaseous cracking products is that they are immediately free of solid impurities, such as inorganic compounds which do not crack and which were already present in the feed material and carbon (char) particles produced during the cracking process. Moreover, the gaseous products are also free of plastic/polymeric material which has not yet been cracked sufficiently. It also enables the use of a tank reactor wherein plastic material is continuously fed and from which gaseous product is continuously removed to produce a wax product.

In the method according to the present invention, the polyolefin containing material is cracked stepwise in a series of successive cracking phases. Before being fed into the tank reactor, the polyolefin containing material is preferably molten. This can be done efficiently in an extruder. In the first cracking phase the liquid phase is kept in the tank reactor at a temperature which is lower than the temperature of the liquid phase in the final cracking phase. The present inventors have found that a lower cracking temperature enables to reduce the production of non-condensable gases, especially when a higher pressure is applied in the tank reactor for example when a heavier fraction of the produced gaseous cracking products is recracked therein. The polyolefin containing material can thus be cracked under optimal temperature conditions in the first cracking phase to maximize the yield of the condensable fraction of the gaseous cracking product. Moreover, since during the first cracking phase the tank reactor continuously contains liquid phase which can be cracked, a higher yield of higher molecular weight hydrocarbons is obtained, in particular a higher yield of wax fraction.

An advantage of the process of the present invention is that the polyolefin or polyolefins contained in the polyolefin containing material do not need to be cracked completely during the first cracking phase so that the temperature in the reactor may be lower during this first cracking phase than the temperature at which the polyolefin or polyolefins are completely cracked in a TGA analysis. The production of non-condensable gases can thus be reduced during the first cracking phase whilst the polyolefin itself will be completely cracked at a higher temperature during the final cracking phase. During the first cracking phase a lot more cracking product is produced than in the final cracking phase since during the first cracking phase polyolefin containing material is continuously fed into the reactor. Especially during the first cracking phase it is thus important to reduce the production of non-condensable gases.

The problem of the possible presence of more thermally stable polymers in the polyolefin containing (waste) material, which do not crack or at a smaller rate than the polyolefins during the first cracking phase, is also solved in the process according to the invention by the fact that, after the first cracking phase, feeding of polyolefin containing material is interrupted and the liquid phase which remains in the tank reactor after the first cracking phase is further cracked, at a higher temperature, during the next cracking phase (which is either the final cracking phase or an intermediate cracking phase carried out between the first cracking phase and the final cracking phase). The thermally more stable polymeric material, and also the part of the polyolefins which is not completely cracked, can thus only accumulate to a limited extent in the reactor during the first cracking phase and will finally be cracked entirely during the final cracking phase as a result of the higher temperature at which the liquid phase is further cracked during this final cracking phase.

In the method according to the present invention, the problem of the accumulation of char in the reactor is solved by interruption of the feeding of polyolefin containing material in the reactor while continuing the cracking of the liquid phase at a higher temperature. Cracking of this liquid phase is more particularly continued until the liquid phase contained in the tank reactor has disappeared and has been converted completely into the final gaseous product leaving only the solid residue in the tank reactor.

The first temperature, i.e. the temperature applied during the first cracking phase, should be sufficiently high, namely within the range of 420 to 510°C, and the temperature applied during the final cracking phase should be at least 525°C. Keeping the liquid phase during the first cracking phase at such a relatively high temperature enables to produce a first gaseous product which contains a relatively high amount of higher molecular weight hydrocarbons. At such a high temperature, the polyolefins are moreover cracked at a higher rate so that the residence time of the gaseous cracking product in the tank reactor is shorter, especially since the tank reactor continuously contains liquid phase which is continuously cracked. Undesired further cracking of the first gaseous product in the gaseous phase of the tank reactor to lighter fractions, and especially also to non-condensable gases, is thus reduced. Compared to tube reactors, the free space in a tank reactor can also be much smaller so that also the residence time of the hot gaseous products in the tank reactor can be kept to a minimum.

In a specially advantageous embodiment of the process according to the present invention said at least two successive cracking phases include an intermediate cracking phase in between said first cracking phase and said final cracking phase, during which intermediate cracking phase feeding of said polyolefin containing material in the tank reactor is interrupted, the liquid phase remaining in the tank reactor at the end of said first cracking phase being heated during the intermediate cracking phase to an intermediate temperature which is 20 to 50°C higher than said first temperature, but lower than said final temperature, and being further cracked during the intermediate cracking phase to produce an intermediate gaseous product which is removed from the tank reactor during the production thereof and the material remaining in the tank reactor at the end of said intermediate cracking phase being further cracked during the final cracking phase to produce said final gaseous product and said solid residue.

The thermally more stable polymers which may be present in the plastic material have a higher T₅₀ degradation temperature than the polyolefins contained in the plastic material. The polyolefins, or one or more of the polyolefins, may also not crack completely at the first temperature applied during the first cracking phase. By the higher temperature applied during the intermediate cracking phase the thermally more stable polymers, and also the portion of the polyolefins which are not completely cracked in the first reactor, can thus also be cracked further to produce valuable products.

During the intermediate cracking phase, the liquid phase is further cracked at a temperature which is in between the first cracking temperature and the final cracking temperature. The thermally more stable polymeric material, and also the part of the polyolefins which is not completely cracked during the first cracking phase, and which may be more difficult to crack than the initial polyolefin material, can be cracked further during the intermediate cracking phase whilst still reducing the production of non-condensable gases. Only during the final cracking phase, the final gaseous product will have a much higher content of non-condensable gases but the amount of final gaseous product is relatively small compared to the total amount of first and intermediate gaseous product.

Preferably, said intermediate temperature is less than 40°C, preferably less than 30°C, higher than said first temperature.

In this way, the production of non-condensable gases during the intermediate cracking phase is kept to a minimum whilst still enabling to further crack the liquid phase which remains after the first cracking phase more efficiently.

In an embodiment of the process according to the present invention said final temperature is higher than 535°C and preferably higher than 545°C.

It has been found that at such high temperatures a bone dry solid residue, which is no longer sticky and which can thus be removed easily from the final reactor, can be obtained even when the polyolefin containing material contains polymers which are more difficult to crack or when compounds which are more difficult to crack are formed in situ during the cracking process itself.

Preferably, the temperature at which the liquid phase contained in the final tank reactor is further cracked after having interrupted feeding of liquid phase in the final tank reactor is lower than 650°C and more preferably lower than 600°C.

It has been found that very high temperatures are not required to achieve a complete cracking of the polyolefin containing material so that important time and energy savings can be realized by applying less high temperatures during the final cracking phase.

In an embodiment of the process according to the present invention, or according to any one of the preceding embodiments, said polyolefin containing material contains one or more biopolymers, in particular in an amount of at least 0.1 % by dry weight, and/or said polyolefin containing material is a post-consumer waste material, in particular waste material from curb-side collection.

The presence of biopolymers makes it more difficult to obtain a bone dry solid residue. Even when waste material from curb-side collection is washed, it will still be polluted to some extent and it will still contain for example paper in the form of labels which are adhered to the polymeric material.

In an embodiment of the process according to the present invention, or according to any one of the preceding embodiments, the material is cracked during the final cracking phase in such a manner that the solid residue produced therein is substantially free of hydrocarbons.

In an embodiment of the process according to the present invention said first temperature is lower than or equal to 500°C.

The present inventors have found that especially the temperature has an important effect on the production of non-condensable gases and that the maximum temperatures of this embodiment enable to minimize the production of gases. By increasing the pressure of the gaseous phase, a larger fraction of lighter hydrocarbons are produced but surprisingly, when the temperature is sufficiently low, not more non-condensable gases.

In an embodiment of the process according to the present invention, or according to any one of the preceding embodiments, said first temperature is higher than 430°C and preferably higher than 440°C. Alternatively, or additionally, said material has a T₅₀ degradation temperature at which a weight loss of 50% takes place in a thermogravimetric analysis, at a heating rate of 10°C per minute, said first temperature being at most 20°C and preferably at most 5°C lower than said T₅₀ degradation temperature and is more preferably at least 10°C, most preferably at least 20°C higher than said T₅₀ degradation temperature. In case one or more additives, such as catalysts or calcium oxide, are used in the first reactor which lower the T₅₀ degradation temperature of the plastic material, the T₅₀ degradation temperature has to be determined for the polyolefin containing material mixed with those one or more additives (in the same concentration as in the liquid phase contained in the first reactor).

Keeping the liquid phase during the first cracking phase at a temperature higher than these preferred minimum temperatures is advantageous in that a first gaseous product can be produced which contains a larger amount of higher molecular weight hydrocarbons.

In an embodiment of the process according to the present invention, or according to any one of the preceding embodiments, the gaseous phase is kept during the first cracking phase at a first pressure in the tank reactor which is lower than 7.0 bara, preferably lower than 5.0 bara and more preferably lower than 3.0 bara, said first pressure being preferably higher than 0.1 bara, more preferably higher than 0.3 bara and most preferably higher than 0.4 bara.

A pressure lower that these maximum pressures is preferred during the first cracking phase since it has been found that a lower pressure increases the yield of waxes having a longer chain length, in particular a C₃₀ to C₄₀ chain length, and reduces at the same time the short chain fraction, in particular the fraction having a chain length of less than 15 carbon atoms. Especially when the temperature in the first reactor is relatively high, lower pressures were also found to reduce the formation of non-condensable gases. On the other hand, a pressure higher than the minimum pressures is preferred in order to avoid a too large fraction of hydrocarbons having a too high chain length, for example a chain length higher than C₄₀, which needs to be recracked and which thus has to be separated off from the valuable fraction.

In an embodiment of the process according to the present invention, or according to any one of the preceding embodiments, the gaseous phase is kept during said first cracking phase at a first pressure in the tank reactor, the tank reactor being operated at at least two different values of said first pressure, including in particular at least one lower value so that said first gaseous product has a first weight average carbon number and at least one higher value, which is higher than said lower value, so that said first gaseous product has a second weight average carbon number which is lower than said first weight average carbon number. Preferably, said higher value of said first pressure is larger than 1.0 bara, preferably larger than 1.2 bara and more preferably larger than 1.4 bara, and said lower value of said first pressure is smaller than 1.0 bara, preferably smaller than 0.8 bara and more preferably smaller than 0.6 bara.

The process according to this embodiment thus enables to produce a gaseous hydrocarbon product with either a larger fraction of lower boiling hydrocarbons, i.e. shorter chain hydrocarbons, or with a larger fraction of higher boiling hydrocarbons. The lower boiling hydrocarbons are preferred in case the product is to be further cracked in a steam cracker to produce monomers, in particular ethylene, propylene and/or butylene. The feed stock of a steam cracker has indeed preferably a relatively low boiling point. The production of higher hydrocarbons having a larger wax fraction is preferred in case the polyolefin material contains only a relatively small amount of branched polymers so that a wax fraction can be produced consisting mainly of normal paraffins/olefins, which are more valuable than isoparaffins/olefins.

In an embodiment of the process according to the present invention, or according to any one of the preceding embodiments, a heavier fraction is separated off from said first gaseous cracking product, which heavier fraction is recracked in said tank reactor.

The heavier fraction can be a fraction that has a too long chain length for being a wax or which has a too high boiling point to be further processed by a steam cracker.

Preferably, when recracking said heavier fraction in said tank reactor the gaseous phase is kept in said tank reactor at a second pressure which is higher than 1.0 bara, preferably higher than 2.0 bara and more preferably higher than 3.0 bara but preferably lower than 15.0 bara, more preferably lower than 10.0 bara and most preferably lower than 5.0 bara.

Since this heavier fraction has already been cracked, and has thus a shorter chain length than the polyolefin starting material, a higher gas pressure is maintained in the tank reactor so that the heavier fraction can be cracked more efficiently therein. By the higher pressure re-vaporisation of the heavier phase is suppressed so that this heavier phase is more effectively cracked. An advantage of this embodiment is that no higher cracking temperature has to be applied. The production of non-condensable gases can thus also be reduced when recracking the heavier fraction. A pressure lower that the maximum pressures is preferred since it has been found that a lower pressure increases the yield of waxes having a longer chain length, in particular a C₃₀ to C₄₀ chain length, and reduces at the same time the short chain fraction, in particular the fraction having a chain length of less than 15 carbon atoms, and also the production of non-condensable gases. Moreover, higher pressures may increase the production of non-condensable gases, in particularly when the reactor is operated at a relatively high temperature.

Preferably, when recracking said heavier fraction in said tank reactor the liquid phase is kept in said tank reactor at a second temperature which is comprised between 420°C and 510°C.

In this preferred embodiment, the production of non-condensable gases is also reduced during recracking of the heavier fraction.

Advantageously, said heavier fraction is recracked by feeding it, in addition to said polyolefin containing material, during said first cracking phase to said tank reactor.

An advantage of feeding the heavier fraction during the first cracking phase of the polyolefin containing material to the tank reactor is that it reduces the viscosity of the liquid phase contained in the tank reactor. The liquid phase contained in the tank reactor has indeed a viscosity which increases during the first cracking phase due to accumulation of polymeric material which is thermally more stable and/or of polyolefins which also become thermally more stable by being partially cracked. These materials are thus diluted by the heavier fraction which is returned to the tank reactor.

In an embodiment of the process according to the present invention, or according to any one of the preceding embodiments, said tank reactor is a continuously stirred-tank reactor

The liquid phase contained in a continuously stirred-tank reactor can be mixed efficiently therein so that a better heat transfer and a more uniform temperature can be achieved. In this way, the product yield can be increased since the formation of non-condensable gases and also char formation can be reduced considerably. A tank reactor has also the advantage that the gas volume, i.e. the volume of the tank which is not occupied by the liquid phase, can be kept to a minimum so that also the residence time of the gaseous products, and thus further undesired reactions thereof, can be kept to a minimum.

The tank reactor can be operated semi-continuous. During the first cracking phase it is operated continuous enabling a high production capacity and also a reduction of the production of char and non-condensable gases. The solid residue produced in the reactor was found to consist mainly of inorganic compounds, and to contain only a relatively small fraction of char, in particular only about 10 to 15 wt.%.

In an embodiment of the process according to the present invention, or according to any one of the preceding embodiments, said material contains at least one component, including in particular said at least one thermally more stable polymer, which accumulates during said first cracking phase in the liquid phase contained in the tank reactor, feeding of said polyolefin containing material in the tank reactor being interrupted and the next cracking phase started when the concentration of said component in the liquid phase contained in the tank reactor reaches a threshold concentration. In another embodiment, said material contains at least one component, including in particular said at least one thermally more stable polymer, which accumulates during said first cracking phase in the liquid phase contained in the tank reactor, feeding of said polyolefin containing material in the tank reactor being interrupted and the next cracking phase started when the dynamic viscosity of the liquid phase in the tank reactor, at said first temperature, reaches a threshold viscosity which is lower than 200 mPa.s, preferably lower than 100 mPa.s and more preferably lower than 50 mPa.s.

The plastic (i.e. the polyolefin containing) material may contain different components which accumulate in the liquid phase during the first cracking phase. First of all it may contain a portion of the polyolefins which, as such or after a first cracking step, do not crack further at the first temperature. It may also contain polymers, such as rubbers and biopolymers, which are thermally more stable than the polyolefins and which are therefore not cracked, or at least not completely, during the first cracking phase. The plastic material may also comprise non-crackable components, in particular inorganic components such as fillers, inorganic pigments and impurities such as sand and salts, and also aluminium. Especially so-called polyal comprises a large fraction of aluminium. When these components accumulate in the reactor, the apparent viscosity of the liquid phase contained therein increases. By interrupting feeding of polyolefin containing material in the tank reactor, i.e. by starting the intermediate or the final cracking phase, the accumulation of these components in the tank reactor is stopped and the liquid phase is further cracked to produce the solid product which can be easily removed from the reactor in order to enable to start a new cracking cycle. During the first cracking phase, the liquid phase contained in the tank reactor can be mixed efficiently thereby achieving a better heat transfer and a more uniform temperature. In this way, the product yield can be increased since the formation of non-condensable gases and also char formation can be reduced considerably.

Other advantages and particularities of the present invention will become apparent from the following description of some particular embodiments of the process according to the invention. This description is only given by way of example and is not intended to limit the scope of the invention. The reference numerals used in the description relate to the annexed drawings wherein:
Figure 1 is a schematic flow diagram illustrating a preferred embodiment of the process according to the present invention;
Figure 2 is an example of a thermogravimetric analysis (TGA) of the virgin LDPE material used in the experiments; and
Figures 3 to 6 show the compositions of the condensed phases of the gaseous products obtained by cracking the virgin LDPE material under the indicated cracking conditions.

The invention generally relates to a process for cracking a polyolefin containing material, i.e. a plastic material. By the term polyolefins is meant a polymer of an alkene, or a combination of alkenes, in particular of ethylene and/or propylene. The plastic material will usually be a waste material. This waste material may be production waste and/or post-consumer waste. The waste material is in particular a post-consumer waste material from curb-stone collection. The plastic material may thus be polluted with other materials in particular with other plastic materials such as polystyrene and polyvinylchloride. However, it preferably contains at least 60% by dry weight, more preferably at least 70% by dry weight and most preferably at least 80% by dry weight of polyolefins. Usually, it will also contain non-crackable solids, in particular inorganic solids, and one or more thermally more stable polymers such as rubber and biopolymers such as starch based polymers. The waste material is often polluted with biopolymers, even after having washed the waste material, so that the waste material contains at least 0.1 % by dry weight of biopolymers. The biopolymers may originate for example from paper, for example from labels, or from food rests. Biopolymers can be defined as being natural polymers produced by the cells of living organisms. Biopolymers consist in particular of polynucleotides, polypeptides and polysaccharides.

In the process of the present invention the polyolefin containing material is thermally cracked so as to be converted into one or more gaseous cracking products leaving only a solid residue. The complete polyolefin containing material is thus cracked to evaporation leaving only a solid residue in the tank reactor. This solid residue consists of non-crackable solids, in particular inorganic substances, contained in the plastic material and char produced by the cracking of the hydrocarbons contained in the plastic material. The gaseous cracking products are condensed to produce a non-condensable fraction, i.e. a gas fraction containing especially C₁ to C₅ hydrocarbons, and a condensable fraction which can be condensed to produce a liquid product containing C₆ and higher hydrocarbons, in particular C₆ to C₃₆, C₃₇, C₃₈, C₃₉ or C₄₀ hydrocarbons (depending on the desired end product), and a small fraction of even somewhat higher hydrocarbons.

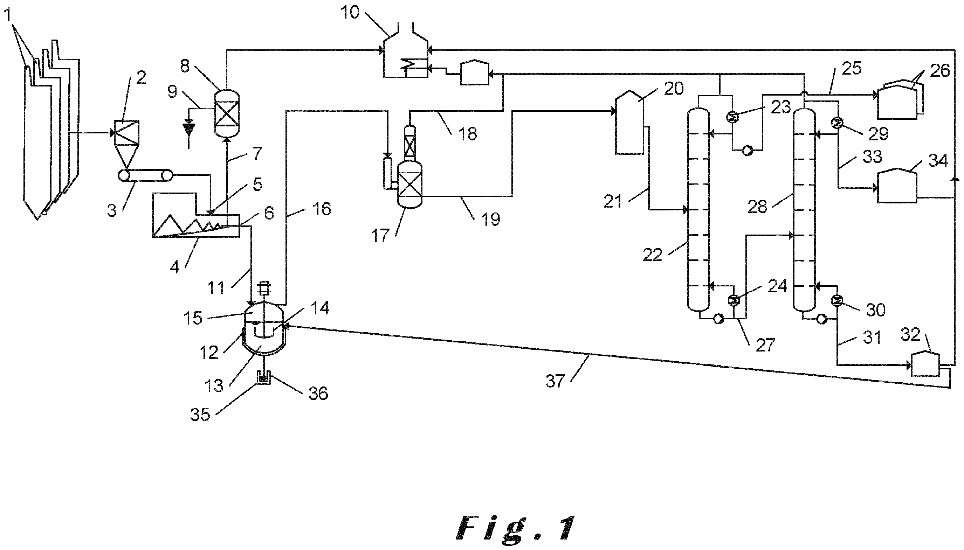

A particular embodiment of the process according to the invention is illustrated in Figure 1. In particular the different pipes, reactors, distillation columns and other components are indicated schematically in this diagram but the necessary valves and pumps have not been indicated and described in detail as a skilled person knows how and where to provide such pumps and valves depending on the pressure conditions which are described herein after.

In a first phase of the process illustrated in Figure 1, the plastic material, in particular plastic waste, is stored and sorted in different silos 1. Via a hopper 2 and a conveyor belt 3 it is fed into an extruder 4 wherein the plastic material is molten. The solid plastic material is fed into an inlet 5 of the extruder 4 and leaves the extruder 4 through its outlet 6. When moving from the inlet 5 to the outlet 6 the plastic material is gradually heated to a temperature of for example 350°C so that it is in a molten state at the outlet 6. During the heating, any moisture will evaporate and halogen containing plastics, such as PVC, are dehydrohalogenated. Moreover, VOC's (volatile organic compounds) may be formed in the extruder. All of these gases/vapours are removed from the extruder 4 via an evacuation pipe 7 to a scrubber 8. In the scrubber 8, the VOC's are separated from the moisture containing the hydrochloric acid, which is collected via pipe 9 whilst the VOC's are fed to an incinerator device 10 to recover the energy contained in those gases. The incinerator device 10 preferably comprises a combined heat and power generator.

The molten plastic material produced in the extruder 4 is supplied via a pipe 11 to a tank reactor 12. The supply of molten plastic material into the tank reactor 12 is controlled during a first cracking phase so that this reactor 12 continuously contains a liquid phase 13 which is heated during the first cracking phase to a first temperature to be continuously cracked in the first reactor 12. The gaseous phase 15 in the reactor contains the gaseous cracking product. The iquid phase 13 occupies preferably more than 50%, more preferably more than 60% of the internal volume of the tank reactor 12. In this way, the volume of the first gaseous product produced in the reactor 12 occupies only a relatively small volume therein so that its residence time in the reactor, and any further reactions in the gaseous phase, is limited. The liquid phase 13 is preferably stirred by means of a stirring device 14 to achieve a uniform temperature in the liquid phase 13. Also any solid particles, in particular inorganic particles, are kept in suspension by means of the stirring device 14. The stirring device 14 preferably comprises a scraper which scrapes along the inner wall of the reactor 12 to scrap off any char that may be formed on the wall of the reactor 12.

The temperatures indicated in the present specification are the average temperatures, more particularly the average temperatures of the whole liquid phase. When the liquid phase is sufficiently stirred so that it has a substantially uniform temperature, the temperature can be measured on one location in the liquid phase, in particular at a distance from the wall of the reactor.

The first temperature can be selected to maximize the yield of condensable alkanes/alkenes in the gaseous product, i.e. to minimize the production of non-condensable gases and also of char. The temperature of the liquid phase 13 is preferably maintained during the first continuous cracking phase at a predetermined temperature between 420 and 510°C, more preferably between 430 and 510°C and most preferably between 440°C and 500°C. The first temperature is selected to achieve a cracking of the polyolefins contained in the molten plastic material. To select the optimal cracking temperature, the T₅₀ degradation temperature of the plastic material which is supplied to the tank reactor 12 is preferably first measured. The T₅₀ degradation temperature is the temperature at which a weight loss of 50% takes place in a thermogravimetric analysis, at a heating rate of 10°C per minute. The first temperature of the liquid phase 13 in the tank reactor 12 is then preferably selected to be at most 20°C and preferably at most 5°C lower than this T₅₀ degradation temperature and to be more preferably at least 10°C, most preferably at least 20°C higher than this T₅₀ degradation temperature. It has been found that at such temperatures an effective cracking of the plastic material can be achieved although the polyolefins contained in the plastic material do not need to be cracked completely during the first cracking phase. At such temperatures the continuous cracking rate is also sufficiently high to reduce the residence time of the gaseous product in the reactor 12 in order to avoid or reduce the undesired further cracking of the gaseous cracking products in the gaseous phase 15 of the tank reactor 12.

In addition to the plastic material one or more additives may be fed into the first reactor 12. Such additives may comprise catalysts but may also comprises substances, such as calcium oxide, for capturing hydrochloric acid. When those additives lower the T₅₀ temperature of the mixture, the T₅₀ degradation temperature is to be measured for the plastic material mixed with the same amount of additives, i.e. having the same concentration of those additives, as in the liquid phase contained in the first reactor 12. The process according to the present invention is however preferably carried out without the addition of catalysts to the first reactor 12.

The gas pressure prevailing in the tank reactor 12 during the first continuous cracking phase is selected so that part of the cracking products can evaporate from the liquid phase 13 and produce a first gaseous product forming a first gaseous phase 15 above the liquid phase 13 in the tank reactor 12. This gas pressure is preferably lower than 7.0 bara, more preferably lower than 5.0 bara and most preferably lower than 3.0 bara or even lower than or equal to 2.0 bara.

With the process according to the present invention a mixture of alkanes/alkenes can be produced having a chain length, after having removed the non-condensable gases therefrom, as from C₆ to C₄₀ or even higher. The highest fraction needs to be removed afterwards since otherwise the boiling point of the mixture would be generally too high for being suitable as feedstock for a steam cracker (use as "naphtha") or since otherwise the mixture would not be a wax mixture (use as "wax"), which may only contain alkanes/alkenes having a chain length up to 38 or at most up to 40 carbon atoms.

Using a pressure below the preferred upper limits enables to produce a mixture of alkanes/alkenes which contain more of a wax fraction (C₂₈ to C₄₀ hydrocarbons). When a fraction of the cracking product will be used as wax, "wax" conditions will preferably be applied in the first reactor 12, in particular a pressure which is sufficiently low, in particular lower than 1.0 bara and more particularly lower than 0.8 bara or even lower than 0.6 bara, for example equal to about 0.5 bara. At such a relatively low pressure, more hydrocarbons having a chain length of more than 40 carbon atoms will arrive in the gaseous phase, so that more of such longer hydrocarbons will later on have to be removed again from the mixture. Preferably, the production of longer chain hydrocarbons is limited by selecting a pressure in the first tank reactor 12 which is higher than 0.1 bara, preferably higher than 0.3 bara and more preferably higher than 0.4 bara.

When the cracking product will not be used to produce a wax, "naphtha" conditions will preferably be applied in the first reactor 12, in particular a pressure which is higher than 1.0 bara, preferably higher than 1.2 bara and more particularly higher than 1.4 bara, and which is for example equal to about 1.5 bara. At such a relatively high pressure, less hydrocarbons having a chain length of more than 40 (or even less) carbon atoms will arrive in the gaseous phase, so that less of such longer hydrocarbons will later on have to be removed again from the mixture.

The choice between the "naphtha" and the "wax" conditions can be made based on the composition of the plastic material. If the polymer chains of the plastic materials are strongly branched, in particular when the plastic material contains a lot of polypropylene, or also high density polyethylene, the plastic material is preferably cracked under "naphtha" conditions since branched waxes (isoparaffins or iso-olefins) are less valuable than normal paraffins. If the polymers of the plastic materials contains only a small amount of branches, in particular when the plastic material contains no or only a small amount of polypropylene, or also of high density polyethylene, the plastic material is preferably cracked under "wax" conditions since paraffins are more valuable than isoparaffins and especially than "naphtha" (i.e. than feedstock for a steam cracker).

The first gaseous phase 15, i.e. the first product produced in the tank reactor 12 during the first continuous cracking phase, is continuously produced in the reactor 12 and is also continuously removed therefrom, via a first pipe 16, to keep the tank reactor 12 at the first pressure during the first cracking phase. This first pressure may fluctuate to some extent but is preferably kept substantially constant. Also the liquid level in the reactor 12 may fluctuate somewhat but is preferably kept substantially constant. The gaseous first product is fed via the pipe 16 to a first quencher 17 which is preferably at a pressure which is substantially equal to the pressure in the tank reactor 12 during the first cracking phase. In the quencher 17 the first product is partially condensed and is separated in a non-condensable gas fraction, which contains C₁ to C₅ hydrocarbons, and in a liquid fraction which contains the C₆ to C₄₀ or even higher alkanes/alkenes. The liquid fraction still contains a minor amount of C₅ hydrocarbons. In practice it is possible to keep also most of the C₅ hydrocarbons in the liquid fraction. However, this is not preferred since this would lower the flash point of the liquid fraction thus requiring additional security measures. At the top, the gases are removed via a pipe 18 to the storage tank of the incinerator device 10. The liquid fraction is fed via a pipe 19 to a liquid product buffer tank 20.

From the buffer tank 20 the liquid product is fed via a pipe 21 to a first distillation column 22, which is provided with a condenser 23 and a reboiler 24. The first distillation column 22 is operated under a partial vacuum to enable a more efficient separation between the heavier and the lighter fraction. At the top a top fraction, containing the hydrocarbons having a boiling point of for example lower than 400°C, and containing thus mainly the lighter C₆ to C₂₅ fraction, is removed from the first distillation column 22 and is fed via a pipe 25 to one of the naphtha storage reservoirs 26. The range of carbon chain lengths contained in this naphtha fraction can be modified, in particular the final boiling point thereof, based on the desired specifications of this naphtha fraction. The bottom fraction, which is removed at the bottom of the first distillation column 22 contains higher hydrocarbons having a boiling point higher than 400°C. This bottom fraction is fed via a pipe 27 to a second distillation column 28, which is provided with a condenser 29 and a reboiler 30.

At the bottom of the second distillation column 28 a heavier fraction is removed with a too high boiling point which is fed via a pipe 31 to a reservoir 32. This heavier fraction can be recracked by recycling it to the tank reactor 12 or to another reactor, not shown, which may be used to recrack the heavier fraction. The heavier fraction comprises for example hydrocarbons having a boiling point higher than 500°C. At the top of the second distillation column 28, a wax fraction is removed which is fed via a pipe 33 to a wax reservoir 34. This wax fraction contains for example hydrocarbons, i.e. alkanes and alkenes, having boiling points between 400 and 500°C, i.e. carbon chain lengths of between C₂₅ and C₃₄.

It is clear that the operation of the two distillation columns 22 and 28 can be adjusted as a function of the desired composition, i.e. of the carbon chain length range or the boiling point range, of the naphtha product and the wax product. Optionally, the liquid product can be separated in more fractions.

In case the polyolefins contained in the plastic material contain a lot of branches, in particular when they contain a lot of polypropylene and/or HDPE, the reactor 12 is preferably operated under the "naphtha" conditions, i.e. under a higher pressure, so that the amount of bottom fraction produced by the first distillation column 22 is reduced. This bottom fraction can then be fed directly to the heavy fraction reservoir 32 (via a pipe not indicated in Figure 1), and forms thus the heavy fraction which is to be recracked to produce more of the lighter "naphtha" fraction which is stored in the naphtha storage reservoirs 26. In case the polyfins contained in the plastic material are mainly linear, in particular when they contain a lot of LDPE, the first reactor 12 is preferably operated under the "wax" conditions, i.e. under a lower pressure, so that the amount of top (naphtha) fraction produced by the first distillation column 22 is reduced whilst the amount of bottom fraction, containing the wax fraction, is increased.

In accordance with the present invention, the polyolefin containing material is not cracked in one single cracking phase, at a certain temperature and pressure, but it is cracked in a series of at least two successive cracking phases.

During the first cracking phase most of the gaseous cracking product is produced. During this first cracking phase, polyolefin containing material is indeed continuously fed into the reactor 12 so that a predetermined level of liquid phase is maintained in the reactor 12. Gaseous product is thus continuously produced in the reactor 12 during the first cracking phase.

As explained hereabove, the pressure and the temperature in the tank reactor 12 are controlled during the first cracking phase in order to maximize the yield of condensable alkanes/alkenes in the gaseous product. When the plastic material which is fed to the reactor 12 contains inorganic solids and/or one or more polymers which are thermally more stable than the polyolefins contained therein, these inorganic solids and thermally more stable polymers will accumulate during the first cracking phase in the liquid phase 13 of the reactor 12. Also any char produced in the reactor 12 will accumulate therein even as a portion of the partially cracked polyolefins which doesn't crack further at the relatively low temperature at which the reactor 12 is operated during the first continuous cracking phase.

Feeding of the polyolefin containing material in the tank reactor 12 is preferably interrupted, and the next cracking phase is thus started, when the concentration of such products in the liquid phase 13 contained in the tank reactor 12 reaches a threshold concentration. The accumulation of thermally more stable polymer products in the reactor 12 will indeed usually be the limiting factor. However, when inorganic solids, including char, would still accumulate too much in the first reactor 12, the first cracking phase is preferably stopped by interrupting feeding of the plastic material in the reactor 12 when the concentration of these inorganic solids reaches a threshold concentration. This may especially be the case when the plastic material comprises a so-called polyal material, i.e. a combination of polymeric and aluminium layers.

Instead of, or in addition to, keeping the concentration of the thermally more stable polymer products in the liquid phase 13 below a predetermined threshold concentration, it is also possible to monitor the dynamic viscosity of this liquid phase 13 and to stop the first cracking phase by interrupting feeding of plastic material in the reactor 12 when the dynamic viscosity of the liquid phase 13 in the tank reactor 12, at said first temperature, reaches a threshold viscosity which is lower than 200 mPa.s, preferably lower than 100 mPa.s and more preferably lower than 50 mPa.s.

The tank reactor 12 is preferably a continuously stirred-tank reactor. In this reactor, the polyolefins contained in the molten plastic material are continuously cracked. During the first cracking phase, feeding of molten plastic material is, on average, in equilibrium with the production of the first gaseous product, which is removed via the gaseous phase 15 from the reactor. In other words, during the first cracking phase, there will always be an amount of liquid phase 13 present in the reactor 12 although the amount/level thereof may vary to some extent. It was found that such a continuous cracking process, wherein the reactor is continuously filled with liquid phase, enables to considerably reduce the production of non-condensable gases.

During the next cracking phase, which is preferably an intermediate cracking phase carried out between the first cracking phase and a final cracking phase, feeding of plastic material into the reactor 12 is interrupted. During this intermediate cracking phase, the liquid phase 13 contained in the reactor is heated to an intermediate temperature. Also in this phase, the liquid phase 13 is preferably stirred by means of the stirring device 14 to achieve a uniform temperature in the liquid phase 13. Also any solid particles, in particular inorganic particles, are kept in suspension by means of the stirring device 14. The stirring device 14 preferably comprises a scraper which scrapes along the inner wall of the reactor 12 to scrap off any char that may be formed on the wall of the reactor 12.

The intermediate temperature is 20°C to 50°C higher than the first temperature, i.e. than the temperature of the liquid phase 13 during the first continuous cracking phase. Preferably, the intermediate temperature is less than 40°C, preferably less than 30°C, higher than said first temperature.

The higher intermediate temperature enables to further crack the polyolefines which have been cracked only partially during the first cracking phase and optionally also the more thermally stable polymers, or a portion thereof, which are present in the plastic material and which accumulate in the reactor 12 during the first cracking phase.

The intermediate temperature can again be selected to maximize the yield of condensable alkanes/alkenes in the gaseous product, i.e. to minimize the production of non-condensable gases and also of char. During the intermediate cracking phase, the temperature of the liquid phase 13 is preferably at most 50°C, preferably at most 40°C and more preferably at most 30°C higher than the first temperature. In this way, the same advantages are obtained, although to a lesser extent, during the intermediate cracking phase, namely an (even more) effective cracking of the (partially cracked) polyolefins and optionally of the thermally more stable polymers whilst keeping the production of low molecular weight gases to a reduced level.

The gas pressure in the tank reactor 12 is selected during the intermediate cracking phase so that part of the cracking products can evaporate from the liquid phase 13 and produce an intermediate gaseous product forming, during the intermediate cracking phase, the gaseous phase 15 above the liquid phase 13 in the tank reactor 12. This intermediate gas pressure is preferably lower than 15.0 bara, more preferably lower than 10.0 bara and most preferably lower than 5.0 bara but preferably higher than 1.0 bara, more preferably higher than 2.0 bara and most preferably higher than 3.0 bara. It may for example be equal to the pressure during the first cracking phase but preferably it is higher.

The intermediate gaseous product produced in the reactor 12 is preferably also fed via the pipe 16 to the first quencher 17. When the pressure during the intermediate cracking phase is equal to the pressure during the first cracking phase, the first quencher 17 can be operated at a same pressure. When the pressure during the intermediate cracking phase is higher than the pressure during the first cracking phase, the pressure in the first quencher 17 is preferably also increased.

The intermediate pressure may fluctuate to some extent but is preferably kept substantially constant. The gaseous intermediate product is fed via the pipe 16 to the quencher 17 which is preferably at a pressure which is substantially equal to the pressure in the tank reactor 12 during the intermediate cracking phase. In the quencher 17 the intermediate product is partially condensed and is separated in a non-condensable gas fraction, which contains C₁ to C₅ hydrocarbons, and in a liquid fraction which contains the C₆ to C₄₀ or even higher alkanes/alkenes. At the top, the gases are removed via the pipe 18 to the storage tank of the incinerator device 10. The liquid fraction is fed via the pipe 19 to the liquid product buffer tank 20, where it is combined with the liquid product produced during the first cracking phase.

During the intermediate cracking phase at least the portion of the polyolefins which has not been cracked during the first cracking phase, and optionally also the thermally more stable polymers, are also cracked to produce the intermediate gaseous product but the non-crackable material, in particular the inorganic material, and the char produced in the different reactors still continue to accumulate. To be able to remove the inorganic material and the char from the reactor 12 the material in the reactor 12 is further cracked during a final cracking phase to produce a final gaseous cracking product and a solid residue 35. After the final cracking phase any liquid phase present in the reactor 12 has disappeared and has been converted into a solid residue 35. This solid residue is preferably substantially free of hydrocarbons. Once the solid residue 35 has been formed, it can be scraped relatively easily out of the reactor 12. It is then stored in a solid residue container 36. After having removed the solid residue 35 form the reactor 12, feeding of molten plastic material into the reactor 12 can be resumed.

In order to crack the polymers completely during the final cracking phase so as to form a bone dry solid residue instead of some tar or sticky material, a higher final temperature can be provided in the reactor 12, especially after first having operated the reactor at the intermediate cracking temperature. During the final cracking phase the pasty material which remains after the intermediate cracking phase is further cracked at a temperature which is higher than 525°C, preferably higher than 535°C and more preferably higher than 545°C. At these temperatures, a bone dry solid residue can be obtained rather quickly. Although in this final phase more non-condensable gases are produced, this is only for a very limited portion of the total amount of cracked material. The higher temperatures in this final phase, which enable to keep the amount of solid residue to a minimum and to produce a solid residue which can be easily handled and removed from the final reactor, have thus only a very small effect on the total yield of liquid product.

Preferably, the temperature at which the material contained in the reactor 12 is further cracked during the final cracking phase is preferably lower than 650°C and more preferably lower than 600°C. Less energy is required to heat the reactor to these temperatures and especially the reactor 12 can be cooled more quickly to the first temperature when resuming feeding of molten plastic material into the reactor.

In an alternative embodiment the intermediate cracking phase can be omitted. In this embodiment, the liquid phase which remains after the first cracking phase in the reactor 12 is subjected directly after the first cracking phase to the final cracking phase conditions.

The heavier fraction contained in reservoir 32 can be fed into a further reactor, different from the tank reactor 12, in order to be recracked. However, this heavier fraction is preferably fed, via pipe 37, into the tank reactor 12 in order to be recracked therein. In this way only one reactor is required. The gaseous product produced during the recracking phase in the reactor 12 can be condensed again in the quencher 17. When recracking the heavier fraction in the tank reactor 12, the liquid phase 13 is kept in said tank reactor 12 at a second temperature which is comprised between 420°C and 510°C, i.e. at a temperature which is in the same range as the first temperature.

Preferably, the heavier fraction is recracked by feeding it, in addition to the molten plastic material, during said first cracking phase to said tank reactor 12. During the first cracking phase, the temperature is indeed controlled to minimize the production of non-condensable gases. Moreover, the heavier fraction can be used to reduce the viscosity of the liquid phase 13 and/or to reduce the concentration of inorganic material present therein so that the continuous first cracking phase can be continued for a longer period of time.

When recracking the heavier fraction in the tank reactor 12 the gaseous phase is kept therein at a second pressure which is higher than 1.0 bara, preferably higher than 2.0 bara and more preferably higher than 3.0 bara but preferably lower than 15.0 bara, more preferably lower than 10.0 bara and most preferably lower than 5.0 bara. The heavier fraction which was stored in the reservoir 32 and which needs to be cracked further, is more difficult to crack than the virgin polyolefin material. By applying a higher pressure in the tank reactor 12 when feeding the heavier fraction therein, the partially cracked polyolefin material is prevented from evaporating too quickly, and is thus subjected a longer time to the cracking conditions that prevail in the reactor 12. Further cracking can thus be achieved whilst keeping the formation of non-condensable gases still to a minimum.

The heavier fraction can also be fed into the tank reactor 12 during the intermediate cracking phase, i.e. after having interrupted feeding of plastic material in the reactor but before applying the final cracking conditions therein. Preferably, the intermediate gas pressure is higher than the first gas pressure, and is more preferably at least 0.5 bar, most preferably at least 1.0 bar, higher than the first gas pressure. The higher pressure during the intermediate cracking phase was found to be advantageous in that most of the polyolefins contained in the reactor 12 during the intermediate cracking phase have already been partially cracked in the first reactor 12, more particularly to such an extent that they are more difficult to crack than the initial polyolefin material. Applying a higher pressure during the intermediate cracking phase is thus also advantageous to further crack the partially cracked material which remains after the first cracking phase. The viscosity of this remaining material can thus be reduced by adding the heavier fraction thereto. In this way, a more uniform temperature can be maintained in the reactor in order to reduce the formation of char and non-condensable gases during the intermediate cracking phase.

The following experiments show the effects of the cracking conditions that may be applied in the different tank reactors of the above described embodiments.

### Experiments

### Polyolefin containing plastic material

The following experiments were done with virgin LDPE (low density polyethylene) material. A thermogravimetric analysis (TGA) was done with this material at a heating rate which was sufficiently slow in the temperature range wherein the material decomposed, in particular at a heating rate which is at most 10°C per minute to be sufficiently accurate. In the present case the initial heating rate was higher until a temperature of 400°C was reached.

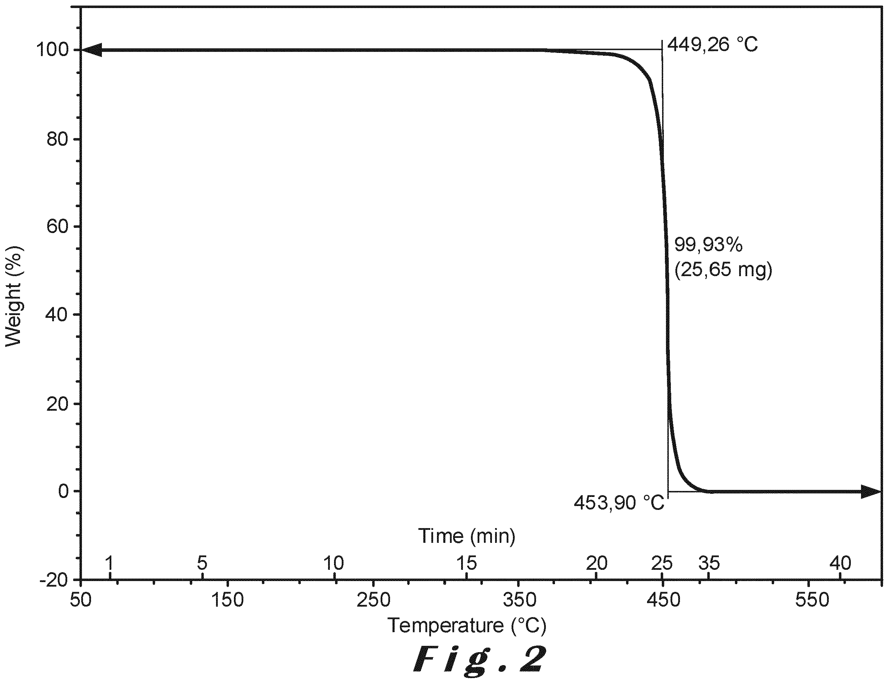

Figure 2 shows the TGA curve that was obtained. The T₅₀ degradation temperature, i.e. the temperature at which 50 wt.% of the material was lost, was equal to about 451 °C.

### Cracking experiments

The LDPE material was fed to an extruder wherein the material was molten and brought to a temperature of 350°C. The flow rate through the extruder was comprised between 2 and 3 kg/h.

The LDPE melt leaving the extruder at 350°C was continuously fed into a tank reactor. The tank reactor was a continuously stirred tank reactor having a volume of 5L. Depending on the processing conditions in the reactor, the holdup, i.e. the liquid phase, fluctuated between 0.5 and 2L. The holdup consisted of molten, partially cracked polymers. Heating of the reactor was provided externally, via heating rods that radiated heat to the stainless steel reactor body. Temperature in the reactor was measured in the liquid phase and kept at the desired value.

Initially the reactor was purged with nitrogen. After that a predetermined pressure was provided in the reactor by means of a vacuum pump for creating a vacuum or by injection of nitrogen gas to create a pressure in the reactor. The gas pressure in the reactor was measured in the upper part of reactor effectively indicating the pressure of the gaseous phase in the reactor. During feeding and cracking of the plastics melt, the pressure was maintained constant.

The feeding of the plastics melt was done for a couple of hours. Samples were taken about every 30 minutes and the analysis results indicated below are an average of 3 samples. The samples were taken during the continuous operation of the reactor.

The gaseous product formed in the reactor was routed via a set of 3 condensers kept at different temperatures to enable effective condensation of the gaseous product. The first condensation was done at a higher temperature within the range of 40-60°C where the following two condensation steps were performed at a lower temperature between -10° and 20°C. The pressure in the condensation train was the same as the pressure in the reactor. The liquid fractions collected at the different condensation stages were mixed together and were subsequently analysed as a whole.

### Broad range pressure experiments

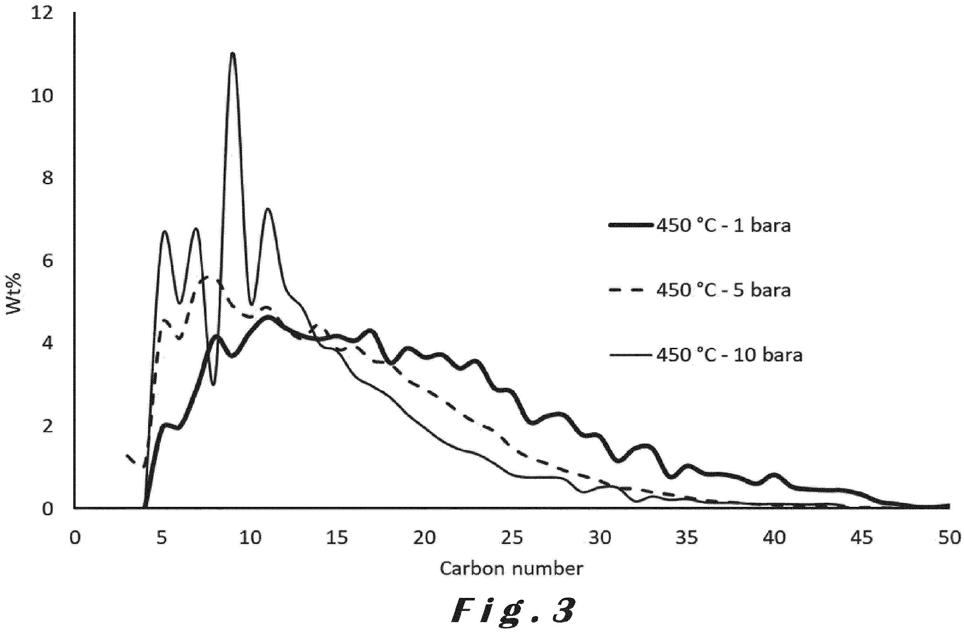

A first series of experiments were done at a temperature of 450°C of the liquid phase contained in the tank reactor. Cracking of the LDPE material was done at pressures of 1, 5 and 10 bara. The compositions of the condensed phases of the gaseous products are indicated in Figure 3. In this figure, and in the next figures, the percent by weight was indicated for each carbon chain length.

First of all it can be seen that the condensed phases contained a relatively high amount of a higher molecular weight hydrocarbons, in particular much more hydrocarbons having a boiling point higher than 350°C than for example the amount (only about 20% of the liquid product) disclosed in the article of Walendziewski. In the process described in this article, the plastic material was completely cracked to char in the first reactor whilst in the present process an amount of liquid phase is continuously kept in the tank reactor.

As appears from the TGA shown in Figure 2, the plastic material is not completely cracked at 450°C. In order to be able to reduce the amount of residue which remains in the reactor after the experiment, and especially also in order to be able to produce a bone dry residue which can be removed easily from the reactor, the temperature in the reactor was increased at the end of the experiment to a temperature of about 550°C, and the reactor was kept at this temperature until a bone dry residue was obtained. During this last phase, no samples of the produced gaseous products were taken.

In Figure 3 it can be seen that more C₆ to C₂₄ naphtha fraction is produced when the pressure is increased in the reactor and that more C₂₅ to C₄₀ wax fraction is produced when a lower pressure is applied in the reactor. The relative amount of wax fraction increases from 10 to 5 bara, and from 5 to 1 bara.

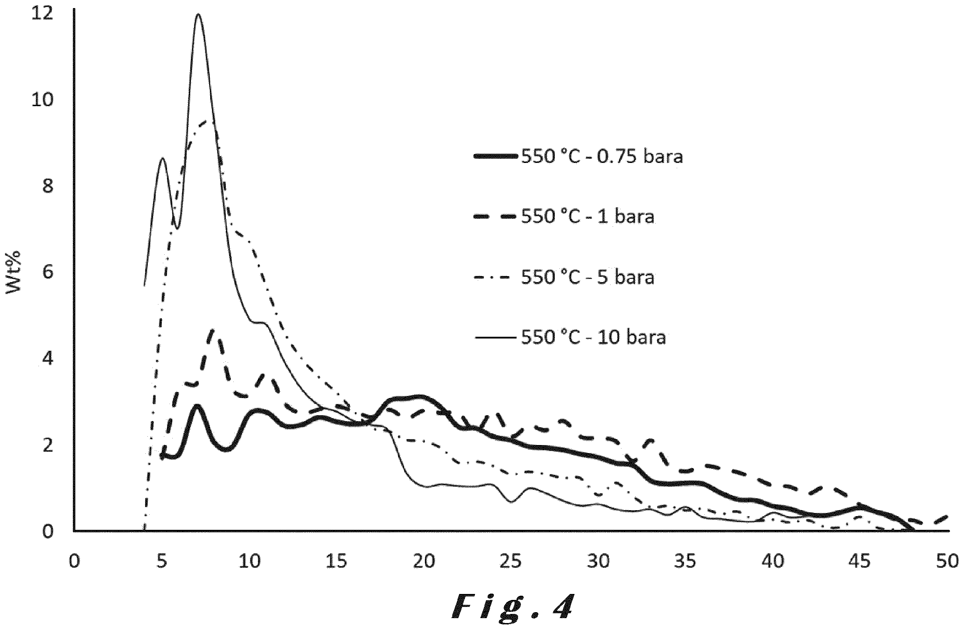

A second series of experiments were done at a temperature of 550°C of the liquid phase contained in the tank reactor. The compositions of the condensed phases of the gaseous products are indicated in Figure 4.

It can be seen that more C₆ to C₂₄ naphtha fraction is produced when the pressure is increased in the reactor from 0.75 to 10 bara and that more C₂₅ to C₄₀ wax fraction is produced when lowering the pressure from 10 to 5 bara, and from 5 to 1 or 0.75 bara.

### Narrower range pressure experiments

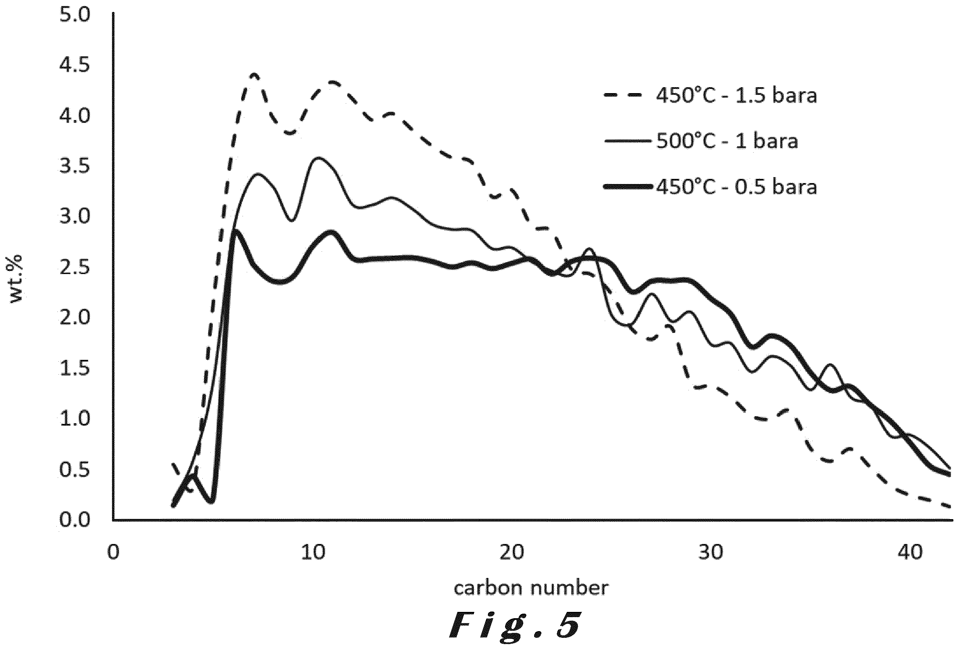

A first series of experiments were done at a temperature of 450°C and at a temperature of 500°C of the liquid phase contained in the tank reactor. Cracking of the LDPE material was done at pressures of 0.5, 1 and 1.5 bara. The compositions of the condensed phases of the gaseous products are indicated in Figure 5.

It can be seen again that more C₆ to C₂₄ naphtha fraction is produced when the pressure is increased in the reactor and that more C₂₅ to C₄₀ wax fraction is produced when a lower pressure is applied in the reactor. Apparently, an increase of the temperature from 450°C to 500°C has no or only a small effect on the composition of the liquid, condensed product.

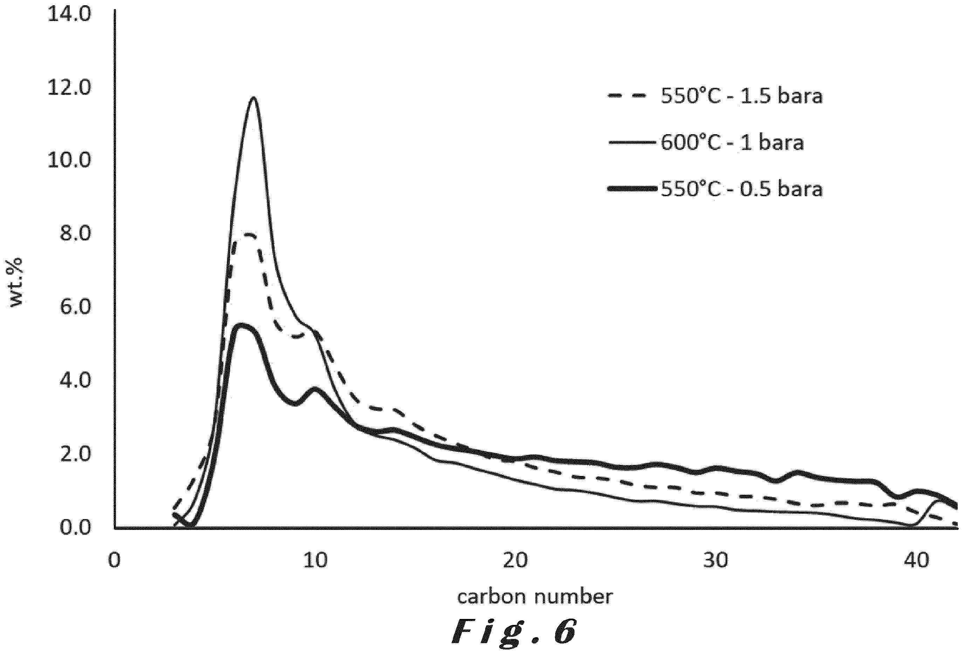

A second series of experiments were done at a temperature of 550°C and at a temperature of 600°C of the liquid phase contained in the tank reactor. Cracking of the LDPE material was done at pressures of 0.5, 1 and 1.5 bara. The compositions of the condensed phases of the gaseous products are indicated in Figure 6.

It can be seen that more C₆ to C₂₄ naphtha fraction is produced when the pressure is increased, at 550°C, from 0.5 to 1.5 bara and that more C₂₅ to C₄₀ wax fraction is produced when the pressure is decreased, at 550°C, from 1.5 to 0.5 bara. An increase of the temperature from 550°C to 600°C seems to have a considerable effect on the relative amounts of naphtha and wax fraction that are produced. Notwithstanding the higher volatility of the wax fraction at a higher temperature of 600°C, it appears that the product comprises less wax fraction by increasing the temperature from 550°C to 600°C. On the other hand, the product contains much more lower hydrocarbons when the temperature is increased from 550°C to 600°C. Apparently, at higher temperature, the polyolefins are cracked into smaller molecules at such higher temperatures.

Further information about the composition of the products obtained in the cracking experiments illustrated in Figures 5 and 6 are given in Table 1.

**Table 1: Experimental conditions, percent by weight of the different fractions of the gaseous products obtained under these conditions, and the condensed liquid yields and the weight average carbon numbers of the C₆ to C₄₀ fraction contained in the condensed liquid products.**

| Boiling | 450°C | 500°C | 450°C | 550°C | 550°C | 600°C |
|---|---|---|---|---|---|---|
| Temp. (°C) | 0.5 bara | 1.0 bara | 1.5 bara | 0.5 bara | 1.5 bara | 1.0 bara |
| < 40°C | 10.0 | 8.0 | 9.0 | 29.0 | 35.0 | 49.0 |
| 40 - 270 | 27.6 | 33.6 | 40.2 | 31.7 | 39.6 | 36.6 |
| 270 - 350 | 17.4 | 18.6 | 21.5 | 11.4 | 10.4 | 6.8 |
| 350 - 400 | 11.6 | 11.0 | 10.8 | 6.5 | 4.6 | 2.8 |
| 400 - 500 | 27.5 | 22.9 | 16.3 | 16.2 | 8.4 | 4.4 |
| >500 | 5.9 | 5.7 | 2.2 | 5.2 | 2.0 | 0.4 |
| Liquid yield | 90% | 92% | 91% | 71% | 65% | 51% |
| Wt. av. C number | 19-20 | 17-18 | 15-16 | 16-17 | 11-12 | 9-10 |

First of all it is important to notice that at higher temperatures, namely at temperatures of 550°C and higher, the production of non-condensable gases, i.e. gases having a boiling point lower than 40°C, is considerably increased, compared to the production of those gases at 450°C and 500°C. This results in a corresponding reduction of the yield of condensed liquid. This yield decreases from about 90 - 92% to about 65 - 70%, at 550°C, and to about 50%, at 600°C.

The effect of the change from "wax" conditions to "naphtha" conditions can also be seen clearly in Table 1. In this table, the weight average carbon number calculated over the C₆ - C₄₀ fraction has indeed also been indicated. The weight average carbon number indicates the chain length which is in the middle, i.e. 50 wt.% of the C₆ - C₄₀ fraction has a lower carbon number whilst 50 wt.% of the C₆ - C₄₀ fraction has a higher carbon number. In Table 1 the two carbon numbers, between which the weight average carbon number is comprised, are indicated.

It can be seen that at temperatures of 450°C and 550°C, the weight average carbon number substantially increases when the pressure is lowered from 1.5 bara to 0.5 bara.

An additional experiment was done at a temperature of about 490°C and a pressure of 2 bara. The liquid yield in this experiment was only about 82 %. Especially when working under "naphta" conditions, i.e. at higher pressures, it appears that lower temperatures are advantageous, i.e. temperatures closer to the T₅₀ degradation temperature, in order to reduce the production of non-condensable gases.

## Claims

1. A process for cracking a polyolefin containing material, in particular a polyolefin containing material which contains at least 60 % by dry weight of one or more polyolefins and optionally at least one thermally more stable polymer, in which process said material is thermally cracked to be converted into one or more gaseous cracking products thereby leaving a solid residue (35),
**characterised in that**
said polyolefin containing material is cracked stepwise in at least two successive cracking phases, including a first cracking phase and a final cracking phase, in one tank reactor (12) which contains a liquid phase (13) and a gaseous phase (15), the liquid phase (13) being cracked in each of the cracking phases to produce a gaseous cracking product (15) which is removed from the tank reactor (12) during the production thereof, during the first cracking phase the tank reactor (12) being continuously fed with said polyolefin containing material whilst during the final cracking phase feeding of said polyolefin containing material in the tank reactor (12) is interrupted and the liquid phase (13) remaining in the tank reactor (13) at the end of said first cracking phase being further cracked during the final cracking phase to produce a final gaseous product and a solid residue (35),
in which process:
- the liquid phase (13) contained in said tank reactor (12) is kept during said first cracking phase at a first temperature of between 420°C and 510°C and is cracked during said first cracking phase in said tank reactor (12) at said first temperature to produce a first gaseous cracking product;
- the first gaseous cracking product is removed during the first cracking phase from the tank reactor (12) during the production thereof and is subsequently at least partially condensed;
- the liquid phase (13) which remains at the end of the first cracking phase in said tank reactor (12) is heated during said final cracking phase to a final temperature of at least 525°C and is cracked during said final cracking phase to produce said final gaseous cracking product and said solid residue (35);
- the final gaseous cracking product is removed during the final cracking phase from the tank reactor (12) during the production thereof and is subsequently at least partially condensed;
- after having produced the solid residue (35), it is removed from the tank reactor (12); and
- after having removed the solid residue (35) from the tank reactor (12), the first cracking phase is restarted.

2. The process according to claim 1, **characterised in that** said at least two successive cracking phases include an intermediate cracking phase in between said first cracking phase and said final cracking phase, during which intermediate cracking phase feeding of said polyolefin containing material in the tank reactor (12) is interrupted, the liquid phase (13) remaining in the tank reactor (12) at the end of said first cracking phase being heated during the intermediate cracking phase to an intermediate temperature which is 20 to 50°C higher than said first temperature, but lower than said final temperature, and being further cracked during the intermediate cracking phase to produce an intermediate gaseous product which is removed from the tank reactor (12) during the production thereof and the material (13) remaining in the tank reactor (12) at the end of said intermediate cracking phase being further cracked during the final cracking phase to produce said final gaseous product and said solid residue (35).

3. The process according to claim 2, **characterised in that** said intermediate temperature is less than 40°C, preferably less than 30°C, higher than said first temperature.

4. The process according to any one of the claims 1 to 3, **characterised in that** said final temperature is higher than 535°C and preferably higher than 545°C.

5. The process according to any one of the claims 1 to 4, **characterised in that** said final temperature is lower than 650°C and preferably lower than 600°C.

6. The process according to any one of the claims 1 to 5, **characterised in that** said polyolefin containing material contains one or more biopolymers, in particular in an amount of at least 0.1 % by dry weight, and/or said polyolefin containing material is a post-consumer waste material, in particular waste material from curb-side collection.

7. The process according to any one of the claims 1 to 6, **characterised in that** said solid residue (35) is substantially free of hydrocarbons.

8. The process according to any one of the claims 1 to 7, **characterised in that** said first temperature is lower than or equal to 500°C.

9. The process according to any one of the claims 1 to 8, **characterised in that** said first temperature is higher than 430°C and preferably higher than 440°C.

10. The process according to any one of the claims 1 to 9, **characterised in that** said material has a T₅₀ degradation temperature at which a weight loss of 50% takes place in a thermogravimetric analysis, at a heating rate of 10°C per minute, said first temperature being at most 20°C and preferably at most 5°C lower than said T₅₀ degradation temperature and is more preferably at least 10°C, most preferably at least 20°C higher than said T₅₀ degradation temperature.

11. The process according to any one of the claims 1 to 10, **characterised in that** during said first cracking phase the gaseous phase (15) is kept in said tank reactor (12) at a first pressure which is lower than 7.0 bara, preferably lower than 5.0 bara and more preferably lower than 3.0 bara, said first pressure being preferably higher than 0.1 bara, more preferably higher than 0.3 bara and most preferably higher than 0.4 bara.

12. The process according to any one of the claims 1 to 11, **characterised in that** during said first cracking phase the gaseous phase (15) is kept in said tank reactor (12) at a first pressure, the tank reactor (12) being operated at at least two different values of said first pressure, including in particular at least one lower value so that said first gaseous product has a first weight average carbon number and at least one higher value, which is higher than said lower value, so that said first gaseous product has a second weight average carbon number which is lower than said first weight average carbon number.

13. The process according to claim 12, **characterised in that** said higher value of said first pressure is larger than 1.0 bara, preferably larger than 1.2 bara and more preferably larger than 1.4 bara.

14. The process according to claim 12 or 13, **characterised in that** said lower value of said first pressure is smaller than 1.0 bara, preferably smaller than 0.8 bara and more preferably smaller than 0.6 bara.

15. The process according to any one of the claims 1 to 14, **characterised in that** a heavier fraction (32) is separated off from said first gaseous cracking product, which heavier fraction is recracked in said tank reactor (12).

16. The process according to claim 15, **characterised in that** when recracking said heavier fraction in said tank reactor (12) the gaseous phase (15) is kept in said tank reactor (12) at a second pressure which is higher than 1.0 bara, preferably higher than 2.0 bara and more preferably higher than 3.0 bara but preferably lower than 15.0 bara, more preferably lower than 10.0 bara and most preferably lower than 5.0 bara.

17. The process according to claim 15 or 16, **characterised in that** when recracking said heavier fraction in said tank reactor (12) the liquid phase (13) is kept in said tank reactor (12) at a second temperature which is comprised between 420°C and 510°C.

18. The process according to any one of the claims 15 to 17, **characterised in that** said heavier fraction is recracked by feeding it, in addition to said polyolefin containing material, during said first cracking phase to said tank reactor (12).

19. The process according to any one of the claims 1 to 18, **characterised in that** said tank reactor (12) is a stirred-tank reactor.

20. The process according to claim 19, **characterised in that** said stirred-tank reactor (12) comprises a scraper which scrapes along the inner wall of the reactor (12) to scrap off any char that is formed on the wall of the reactor (12).

21. The process according to any one of the claims 1 to 20, **characterised in that** said polyolefin containing material contains at least one component, including in particular said at least one thermally more stable polymer, which accumulates during said first cracking phase in the liquid phase (13) contained in the tank reactor (12), feeding of said polyolefin containing material in the tank reactor (12) being interrupted and the next cracking phase started when the concentration of said component in the liquid phase (13) contained in the tank reactor (12) reaches a threshold concentration.

22. The process according to any one of the claims 1 to 21, **characterised in that** said polyolefin containing material contains at least one component, including in particular said at least one thermally more stable polymer, which accumulates during said first cracking phase in the liquid phase (13) contained in the tank reactor (12), feeding of said polyolefin containing material in the tank reactor (12) being interrupted and the next cracking phase started when the dynamic viscosity of the liquid phase (13) in the tank reactor (12), at said first temperature, reaches a threshold viscosity which is lower than 200 mPa.s, preferably lower than 100 mPa.s and more preferably lower than 50 mPa.s.

23. The process according to any one of the claims 1 to 22, **characterised in that** said polyolefin containing material is molten in an extruder (4) before being fed into the tank reactor (12).

## Patentansprüche

1. Ein Verfahren zum Cracken eines polyolefinhaltigen Materials, insbesondere eines polyolefinhaltigen Materials, welches mindestens 60 % Trockenmasse eines oder mehrerer Polyolefine und optional mindestens ein thermisch stabileres Polymer enthält, wobei in diesem Verfahren das erwähnte Material thermisch gecrackt wird, um in ein oder mehrere gasförmige Crackprodukte umgewandelt zu werden, wobei ein fester Rückstand (35) übrig bleibt,
**dadurch gekennzeichnet, dass**
das erwähnte polyolefinhaltige Material stufenweise in mindestens zwei aufeinanderfolgenden Crackphasen, einschließlich einer ersten Crackphase und einer letzten Crackphase, in einem Kesselreaktor (12), welcher eine flüssige Phase (13) und eine gasförmige Phase (15) enthält, gecrackt wird, wobei die flüssige Phase (13) in jeder der Crackphasen gecrackt wird, um ein gasförmiges Crackprodukt (15) herzustellen, welches während seiner Herstellung aus dem Kesselreaktor (12) entfernt wird, wobei dem Kesselreaktor (12) während der ersten Crackphase das erwähnte polyolefinhaltige Material kontinuierlich zugeführt wird, wohingegen die Zuführung des erwähnten polyolefinhaltigen Materials in den Kesselreaktor (12) während der letzten Crackphase unterbrochen wird und die flüssige Phase (13), die am Ende der erwähnten ersten Crackphase im Kesselreaktor (12) bleibt, während der letzten Crackphase weiter gecrackt wird, um ein letztes gasförmiges Produkt und einen festen Rückstand (35) herzustellen,
wobei in diesem Verfahren:
- die flüssige Phase (13), die im erwähnten Kesselreaktor (12) enthalten ist, während der erwähnten ersten Crackphase auf einer ersten Temperatur von zwischen 420 °C und 510 °C gehalten wird und während der erwähnten ersten Crackphase im erwähnten Kesselreaktor (12) auf der erwähnten ersten Temperatur gecrackt wird, um ein erstes gasförmiges Crackprodukt herzustellen;
- das erste gasförmige Crackprodukt während seiner Herstellung während der ersten Crackphase aus dem Kesselreaktor (12) entfernt und anschließend zumindest teilweise kondensiert wird;
- die flüssige Phase (13), die am Ende der ersten Crackphase im erwähnten Kesselreaktor (12) bleibt, während der erwähnten letzten Crackphase auf eine letzte Temperatur von mindestens 525 °C erwärmt wird und während der erwähnten letzten Crackphase gecrackt wird, um das erwähnte letzte gasförmige Crackprodukt und den erwähnten festen Rückstand (35) herzustellen;
- das letzte gasförmige Crackprodukt während seiner Herstellung während der letzten Crackphase aus dem Kesselreaktor (12) entfernt und anschließend zumindest teilweise kondensiert wird;
- der feste Rückstand (35) nach seiner Herstellung aus dem Kesselreaktor (12) entfernt wird; und
- die erste Crackphase nach der Entfernung des festen Rückstands (35) aus dem Kesselreaktor (12) erneut gestartet wird.

2. Das Verfahren nach Anspruch 1, **dadurch gekennzeichnet, dass** die erwähnten zumindest zwei aufeinanderfolgenden Crackphasen eine Crackzwischenphase zwischen der erwähnten ersten Crackphase und der erwähnten letzten Crackphase einschließen, wobei während dieser Crackzwischenphase die Zuführung des erwähnten polyolefinhaltigen Materials in den Kesselreaktor (12) unterbrochen wird, wobei die flüssige Phase (13), die am Ende der erwähnten ersten Crackphase im Kesselreaktor (12) bleibt, während der Crackzwischenphase auf eine Zwischentemperatur erwärmt wird, die 20 bis 50 °C höher ist als die erwähnte erste Temperatur, aber niedriger als die erwähnte letzte Temperatur, und während der Crackzwischenphase weiter gecrackt wird, um ein gasförmiges Zwischenprodukt herzustellen, das während seiner Herstellung aus dem Kesselreaktor (12) entfernt wird, und das am Ende der erwähnten Crackzwischenphase im Kesselreaktor (12) bleibende Material (13) während der letzten Crackphase weiter gecrackt wird, um das erwähnte letzte gasförmige Produkt und den erwähnten festen Rückstand (35) herzustellen.

3. Das Verfahren nach Anspruch 2, **dadurch gekennzeichnet, dass** die erwähnte Zwischentemperatur weniger als 40 °C, bevorzugt weniger als 30 °C, höher als die erwähnte erste Temperatur ist.

4. Das Verfahren nach irgendeinem der Ansprüche 1 bis 3, **dadurch gekennzeichnet, dass** die erwähnte letzte Temperatur höher als 535 °C und bevorzugt höher als 545 °C ist.

5. Das Verfahren nach irgendeinem der Ansprüche 1 bis 4, **dadurch gekennzeichnet, dass** die erwähnte letzte Temperatur niedriger als 650 °C und bevorzugt niedriger als 600 °C ist.

6. Das Verfahren nach irgendeinem der Ansprüche 1 bis 5, **dadurch gekennzeichnet, dass** das erwähnte polyolefinhaltige Material ein oder mehrere Biopolymere enthält, insbesondere in einer Menge von mindestens 0,1 % Trockenmasse, und/oder das erwähnte polyolefinhaltige Material ein Post-Consumer-Abfallmaterial ist, insbesondere Abfallmaterial aus Holsystemen.

7. Das Verfahren nach irgendeinem der Ansprüche 1 bis 6, **dadurch gekennzeichnet, dass** der erwähnte feste Rückstand (35) im Wesentlichen frei von Kohlenwasserstoffen ist.

8. Das Verfahren nach irgendeinem der Ansprüche 1 bis 7, **dadurch gekennzeichnet, dass** die erwähnte erste Temperatur niedriger oder gleich 500 °C ist.

9. Das Verfahren nach irgendeinem der Ansprüche 1 bis 8, **dadurch gekennzeichnet, dass** die erwähnte erste Temperatur höher als 430 °C und bevorzugt höher als 440 °C ist.

10. Das Verfahren nach irgendeinem der Ansprüche 1 bis 9, **dadurch gekennzeichnet, dass** das erwähnte Material eine T₅₀-Zersetzungstemperatur hat, bei der in einer thermogravimetrischen Analyse ein Gewichtsverlust von 50 % stattfindet, bei einer Erwärmungsgeschwindigkeit von 10 °C pro Minute, wobei die erwähnte erste Temperatur höchstens 20 °C und bevorzugt höchstens 5 °C niedriger ist als die erwähnte T₅₀-Zersetzungstemperatur und noch besser mindestens 10 °C, am besten mindestens 20 °C höher als die erwähnte T₅₀-Zersetzungstemperatur.

11. Das Verfahren nach irgendeinem der Ansprüche 1 bis 10, **dadurch gekennzeichnet, dass** während der erwähnten ersten Crackphase die gasförmige Phase (15) bei einem ersten Druck, der niedriger ist als 7,0 bara, bevorzugt niedriger als 5,0 bara und noch besser niedriger als 3,0 bara, im erwähnten Kesselreaktor (12) gehalten wird, wobei der erwähnte erste Druck bevorzugt höher als 0,1 bara, noch besser höher als 0,3 bara und am besten höher als 0,4 bara ist.

12. Das Verfahren nach irgendeinem der Ansprüche 1 bis 11, **dadurch gekennzeichnet, dass** während der erwähnten ersten Crackphase die gasförmige Phase (15) bei einem ersten Druck im erwähnten Kesselreaktor (12) gehalten wird, wobei der Kesselreaktor (12) bei mindestens zwei verschiedenen Werten des erwähnten ersten Drucks betrieben wird, einschließlich insbesondere mindestens eines niedrigeren Wertes, sodass das erwähnte erste gasförmige Produkt eine erste gewichtsgemittelte Kohlenstoffzahl hat, und mindestens eines höheren Wertes, der höher als der erwähnte niedrigere Wert ist, sodass das erwähnte erste gasförmige Produkt eine zweite gewichtsgemittelte Kohlenstoffzahl hat, die niedriger ist als die erwähnte erste gewichtsgemittelte Kohlenstoffzahl.

13. Das Verfahren nach Anspruch 12, **dadurch gekennzeichnet, dass** der erwähnte höhere Wert des erwähnten ersten Drucks größer ist als 1,0 bara, bevorzugt größer als 1,2 bara und noch besser größer als 1,4 bara.

14. Das Verfahren nach Anspruch 12 oder 13, **dadurch gekennzeichnet, dass** der erwähnte niedrigere Wert des erwähnten ersten Drucks kleiner ist als 1,0 bara, bevorzugt kleiner als 0,8 bara und noch besser kleiner als 0,6 bara.

15. Das Verfahren nach irgendeinem der Ansprüche 1 bis 14, **dadurch gekennzeichnet, dass** eine schwerere Fraktion (32) vom erwähnten ersten gasförmigen Crackprodukt abgetrennt wird, wobei diese schwerere Fraktion im erwähnten Kesselreaktor (12) erneut gecrackt wird.

16. Das Verfahren nach Anspruch 15, **dadurch gekennzeichnet, dass** beim erneuten Cracken der erwähnten schwereren Fraktion im erwähnten Kesselreaktor (12) die gasförmige Phase (15) bei einem zweiten Druck, der höher als 1,0 bara, bevorzugt höher als 2,0 bara und noch besser höher als 3,0 bara, aber bevorzugt niedriger als 15,0 bara, noch besser niedriger als 10,0 bara und am besten niedriger als 5,0 bara ist, im erwähnten Kesselreaktor (12) gehalten wird.

17. Das Verfahren nach Anspruch 15 oder 16, **dadurch gekennzeichnet, dass** beim erneuten Cracken der erwähnten schwereren Fraktion im erwähnten Kesselreaktor (12) die flüssige Phase (13) bei einer zweiten Temperatur im erwähnten Kesselreaktor (12) gehalten wird, welche zwischen 420 °C und 510 °C liegt.

18. Das Verfahren nach irgendeinem der Ansprüche 15 bis 17, **dadurch gekennzeichnet, dass** die erwähnte schwerere Fraktion erneut gecrackt wird, indem sie, zusätzlich zum erwähnten polyolefinhaltigen Material, dem erwähnten Kesselreaktor (12) während der erwähnten ersten Crackphase zugeführt wird.

19. Das Verfahren nach irgendeinem der Ansprüche 1 bis 18, **dadurch gekennzeichnet, dass** der erwähnte Kesselreaktor (12) ein Rührkesselreaktor ist.

20. Das Verfahren nach Anspruch 19, **dadurch gekennzeichnet, dass** der erwähnte Rührkesselreaktor (12) einen Abstreifer umfasst, der entlang der Innenwand des Reaktors (12) streift, um alle Verkohlungsrückstände abzustreifen, die an der Wand des Reaktors (12) gebildet werden.

21. Das Verfahren nach irgendeinem der Ansprüche 1 bis 20, **dadurch gekennzeichnet, dass** das erwähnte polyolefinhaltige Material mindestens eine Komponente enthält, einschließlich insbesondere des mindestens einen thermisch stabileren Polymers, die sich während der erwähnten ersten Crackphase in der im Kesselreaktor (12) enthaltenen flüssigen Phase (13) ansammelt, wobei die Zuführung des erwähnten polyolefinhaltigen Materials in den Kesselreaktor (12) unterbrochen wird und die nächste Crackphase startet, wenn die Konzentration der erwähnten Komponente in der im Kesselreaktor (12) enthaltenen flüssigen Phase (13) eine Schwellenkonzentration erreicht.

22. Das Verfahren nach irgendeinem der Ansprüche 1 bis 21, **dadurch gekennzeichnet, dass** das erwähnte polyolefinhaltige Material mindestens eine Komponente enthält, einschließlich insbesondere des mindestens einen thermisch stabileren Polymers, die sich während der erwähnten ersten Crackphase in der im Kesselreaktor (12) enthaltenen flüssigen Phase (13) ansammelt, wobei die Zuführung des erwähnten polyolefinhaltigen Materials in den Kesselreaktor (12) unterbrochen wird und die nächste Crackphase startet, wenn die dynamische Viskosität der flüssigen Phase (13) im Kesselreaktor (12), bei der erwähnten ersten Temperatur, eine Schwellenviskosität erreicht, die niedriger ist als 200 mPa.s, bevorzugt niedriger als 100 mPa.s und noch besser niedriger als 50 mPa.s.

23. Das Verfahren nach irgendeinem der Ansprüche 1 bis 22, **dadurch gekennzeichnet, dass** das erwähnte polyolefinhaltige Material in einem Extruder (4) geschmolzen wird, bevor es dem Kesselreaktor (12) zugeführt wird.

## Revendications

1. Procédé de craquage d'un matériau contenant des polyoléfines, en particulier un matériau contenant des polyoléfines qui contient au moins 60 % en poids sec d'une ou de plusieurs polyoléfines et éventuellement d'au moins un polymère thermiquement plus stable, dans lequel procédé ledit matériau est craqué thermiquement pour être converti en un ou plusieurs produits de craquage gazeux, laissant ainsi un résidu solide (35),
**caractérisé en ce que**
ledit matériau contenant de la polyoléfine est craqué progressivement en au moins deux phases de craquage successives, comprenant une première phase de craquage et une phase de craquage finale, dans un réacteur à réservoir (12) qui contient une phase liquide (13) et une phase gazeuse (15), la phase liquide (13) étant craquée dans chacune des phases de craquage pour produire un produit de craquage gazeux (15) qui est éliminé du réacteur à réservoir (12) au cours de sa production, pendant la première phase de craquage, le réacteur à réservoir (12) étant alimenté en continu avec ledit matériau contenant de la polyoléfine, tandis que pendant la phase de craquage finale, l'alimentation dudit matériau contenant de la polyoléfine dans le réacteur à réservoir (12) est interrompue et la phase liquide (13) restant dans le réacteur à réservoir (13) à la fin de ladite première phase de craquage est craquée à nouveau pendant la phase de craquage finale pour produire un produit gazeux final et un résidu solide (35),
dans lequel procédé :
- la phase liquide (13) contenue dans ledit réacteur à réservoir (12) est maintenue pendant ladite première phase de craquage à une première température comprise entre 420°C et 510°C et est craquée pendant ladite première phase de craquage dans ledit réacteur à réservoir (12) à ladite première température pour produire un premier produit de craquage gazeux ;
- le premier produit de craquage gazeux est extrait du réacteur à réservoir (12) au cours de la première phase de craquage pendant la production de celui-ci et est ensuite au moins partiellement condensé ;
- la phase liquide (13) qui reste à la fin de la première phase de craquage dans ledit réacteur à réservoir (12) est chauffée pendant ladite phase de craquage finale à une température finale d'au moins 525°C et est craquée pendant ladite phase de craquage finale pour produire ledit produit de craquage gazeux final et ledit résidu solide (35) ;
- le produit de craquage gazeux final est extrait du réacteur à réservoir (12) au cours de la phase de craquage finale pendant la production de celui-ci et est ensuite au moins partiellement condensé ;
- après avoir produit le résidu solide (35), celui-ci est retiré du réacteur à réservoir (12) ; et
- après avoir retiré le résidu solide (35) du réacteur à réservoir (12), la première phase de craquage est relancée.

2. Procédé selon la revendication 1, **caractérisé en ce que** lesdites au moins deux phases de craquage successives comprennent une phase de craquage intermédiaire entre ladite première phase de craquage et ladite phase de craquage finale, au cours de laquelle la phase de craquage intermédiaire interrompt l'alimentation dudit matériau contenant de la polyoléfine dans le réacteur à réservoir (12), la phase liquide (13) restant dans le réacteur à réservoir (12) à la fin de ladite première phase de craquage étant chauffée au cours de la phase de craquage intermédiaire à une température intermédiaire qui est de 20 à 50°C supérieure à ladite première température, mais inférieure à ladite température finale, et en subissant un nouveau craquage pendant la phase de craquage intermédiaire pour produire un produit gazeux intermédiaire qui est retiré du réacteur à réservoir (12) pendant sa production, et le matériau (13) restant dans le réacteur à réservoir (12) à la fin de ladite phase de craquage intermédiaire subissant un nouveau craquage pendant la phase de craquage finale pour produire ledit produit gazeux final et ledit résidu solide (35).

3. Procédé selon la revendication 2, **caractérisé en ce que** ladite température intermédiaire est inférieure à 40°C, de préférence inférieure à 30°C, par rapport à ladite première température.

4. Procédé selon l'une quelconque des revendications 1 à 3, **caractérisé en ce que** la température finale est supérieure à 535°C et de préférence supérieure à 545°C.

5. Procédé selon l'une quelconque des revendications 1 à 4, **caractérisé en ce que** la température finale est inférieure à 650°C et de préférence inférieure à 600°C.

6. Procédé selon l'une quelconque des revendications 1 à 5, **caractérisé en ce que** ledit matériau contenant de la polyoléfine contient un ou plusieurs biopolymères, en particulier dans une proportion d'au moins 0,1 % en poids sec, et/ou ledit matériau contenant de la polyoléfine est un matériau de déchets de post-consommation, en particulier un matériau de déchets provenant d'une collecte en bordure de trottoir.

7. Procédé selon l'une quelconque des revendications 1 à 6, **caractérisé en ce que** ledit résidu solide (35) est substantiellement exempt d'hydrocarbures.

8. Procédé selon l'une quelconque des revendications 1 à 7, **caractérisé en ce que** ladite première température est inférieure ou égale à 500°C.

9. Procédé selon l'une quelconque des revendications 1 à 8, **caractérisé en ce que** la première température est supérieure à 430°C et de préférence supérieure à 440°C.

10. Procédé selon l'une quelconque des revendications 1 à 9, **caractérisé en ce que** ledit matériau a une température de dégradation T₅₀ à laquelle une perte de poids de 50 % se produit dans une analyse thermogravimétrique, à une vitesse de chauffage de 10°C par minute, ladite première température étant au maximum de 20°C et de préférence au maximum de 5°C inférieure à ladite température de dégradation T₅₀ et est de préférence au minimum de 10°C, de préférence au minimum de 20°C supérieure à ladite température de dégradation T₅₀.

11. Procédé selon l'une quelconque des revendications 1 à 10, **caractérisé en ce que** pendant ladite première phase de craquage, la phase gazeuse (15) est maintenue dans ledit réacteur à réservoir (12) à une première pression inférieure à 7,0 bara, de préférence inférieure à 5,0 bara et plus préférentiellement inférieure à 3,0 bara, ladite première pression étant de préférence supérieure à 0,1 bara, plus préférentiellement supérieure à 0,3 bara et plus préférentiellement supérieure à 0,4 bara.

12. Procédé selon l'une quelconque des revendications 1 à 11, **caractérisé en ce que**, pendant ladite première phase de craquage, la phase gazeuse (15) est maintenue dans ledit réacteur à réservoir (12) à une première pression, le réacteur à réservoir (12) étant exploité à au moins deux valeurs différentes de ladite première pression, dont notamment au moins une valeur inférieure de sorte que ledit premier produit gazeux présente un premier indice de carbone moyen en poids et au moins une valeur supérieure, qui est plus élevée que ladite valeur inférieure, de sorte que ledit premier produit gazeux présente un second indice de carbone moyen en poids qui est plus faible que ledit premier indice de carbone moyen en poids.

13. Procédé selon la revendication 12, **caractérisé en ce que** ladite valeur supérieure de ladite première pression est supérieure à 1,0 bara, de préférence supérieure à 1,2 bara et plus préférentiellement supérieure à 1,4 bara.

14. Procédé selon la revendication 12 ou 13, **caractérisé en ce que** ladite valeur inférieure de ladite première pression est inférieure à 1,0 bara, de préférence inférieure à 0,8 bara et plus préférentiellement inférieure à 0,6 bara.

15. Procédé selon l'une quelconque des revendications 1 à 14, **caractérisé en ce qu'**une fraction plus lourde (32) est séparée dudit premier produit de craquage gazeux, laquelle fraction plus lourde est recraquée dans ledit réacteur à réservoir (12).

16. Procédé selon la revendication 15, **caractérisé en ce que** lors du recraquage de ladite fraction plus lourde dans ledit réacteur à réservoir (12), la phase gazeuse (15) est maintenue dans ledit réacteur à réservoir (12) à une seconde pression supérieure à 1,0 bara, de préférence supérieure à 2,0 bara et plus préférentiellement supérieure à 3,0 bara, mais de préférence inférieure à 15,0 bara, plus préférentiellement inférieure à 10,0 bara et plus préférentiellement inférieure à 5,0 bara.

17. Procédé selon la revendication 15 ou 16, **caractérisé en ce que** lors du recraquage de ladite fraction plus lourde dans ledit réacteur à réservoir (12), la phase liquide (13) est maintenue dans ledit réacteur à réservoir (12) à une seconde température comprise entre 420°C et 510°C.

18. Procédé selon l'une quelconque des revendications 15 à 17, **caractérisé en ce que** ladite fraction plus lourde est recraquée en l'introduisant, en plus dudit matériau contenant de la polyoléfine, au cours de ladite première phase de craquage dans ledit réacteur à réservoir (12).

19. Procédé selon l'une quelconque des revendications 1 à 18, **caractérisé en ce que** le réacteur à réservoir (12) est un réacteur à réservoir agitée.

20. Procédé selon la revendication 19, **caractérisé en ce que** ledit réacteur à réservoir agitée (12) comprend un racleur qui gratte le long de la paroi intérieure du réacteur (12) pour éliminer tout charbon formé sur la paroi du réacteur (12).

21. Procédé selon l'une quelconque des revendications 1 à 20, **caractérisé en ce que** ledit matériau contenant de la polyoléfine contient au moins un composant, y compris en particulier ledit au moins un polymère thermiquement plus stable, qui s'accumule pendant ladite première phase de craquage dans la phase liquide (13) contenue dans le réacteur à réservoir (12), l'alimentation dudit matériau contenant de la polyoléfine dans le réacteur à réservoir (12) étant interrompue et la phase de craquage suivante démarrant lorsque la concentration dudit composant dans la phase liquide (13) contenue dans le réacteur à réservoir (12) atteint une concentration seuil.

22. Procédé selon l'une quelconque des revendications 1 à 21, **caractérisé en ce que** ledit matériau contenant de la polyoléfine contient au moins un composant, dont notamment ledit au moins un polymère thermiquement plus stable, qui s'accumule pendant ladite première phase de craquage dans la phase liquide (13) contenue dans le réacteur à réservoir (12), l'alimentation dudit matériau contenant de la polyoléfine dans le réacteur à réservoir (12) étant interrompue et la phase de craquage suivante démarrant lorsque la viscosité dynamique de la phase liquide (13) dans le réacteur à réservoir (12), à ladite première température, atteint une viscosité seuil inférieure à 200 mPa.s, de préférence inférieure à 100 mPa.s et plus préférentiellement inférieure à 50 mPa.s.

23. Procédé selon l'une quelconque des revendications 1 à 22, **caractérisé en ce que** ledit matériau contenant des polyoléfines est fondue dans une extrudeuse (4) avant d'être introduite dans le réacteur à réservoir (12).
